# EUROPEAN PATENT APPLICATION

(11) **EP 4 261 063 A1**
(43) Date of publication of application: **18.10.2023**
(21) Application number: 20967495.1
(22) Date of filing: 30.12.2020
(51) Int. Cl.: B60H 1/00, B60K 1/00, B60L 58/27, H01M 10/615

(54) **VEHICLE HEAT MANAGEMENT SYSTEM, DRIVING DEVICE, AND ELECTRIC VEHICLE**

(71) Applicant: Huawei Technologies Co., Ltd., Shenzhen, Guangdong 518129 (CN)
(72) Inventor: HUANG, Xin, Shenzhen, Guangdong 518129 (CN); ZHANG, Zhimin, Shenzhen, Guangdong 518129 (CN); REN, Xin, Shenzhen, Guangdong 518129 (CN); HU, Haomang, Shenzhen, Guangdong 518129 (CN)
(74) Representative: Maiwald GmbH
(86) International application number: PCT/CN2020/141217
(87) International publication number: WO 2022/141149

(57) **Abstract**

This application relates to the field of electric vehicles, and in particular, to a vehicle thermal management system, a drive apparatus, and an electric vehicle. The thermal management system includes: a motor configured to drive a compressor of an air conditioner to work, N resistor branches, and a driver configured to drive the motor and resistors on the N resistor branches to work. The driver includes a control circuit and an inverter circuit. The control circuit is configured to control the inverter circuit to output an alternating current to the motor, to drive the motor to rotate. The control circuit is further configured to control the inverter circuit to output currents to the N resistor branches, so that the resistors on the N resistor branches generate heat. Therefore, the motor and a heat emitting resistor are driven by using the single driver. This reduces costs of the thermal management system and saves space of the thermal management system.

## Description

### TECHNICAL FIELD

This application relates to the field of electric vehicles, and in particular, to a vehicle thermal management system, a drive apparatus, and an electric vehicle.

### BACKGROUND

For ride comfort of a vehicle, safety of the vehicle, and exertion of related performance of the vehicle, a thermal management system (thermal management system, TMS) is needed to control temperatures of components such as a passenger compartment and a drive system (for example, an engine of a conventional fuel vehicle and a battery of an electric vehicle) of the vehicle. Therefore, the thermal management system is an important system of the vehicle.

Especially for an electric vehicle, a thermal management system is more important and demanding. Generally, the thermal management system of the electric vehicle needs to control temperatures of a battery (for example, a power battery of the electric vehicle), an electric drive unit (for example, a drive motor that powers running of the electric vehicle by using electric energy provided by the power battery), an on-board charger, a passenger compartment, and the like. Specifically, at a high temperature, it is necessary to dissipate heat for the battery, the electric drive unit, the on-board charging unit, the passenger compartment, and the like. At a low temperature, the thermal management system needs to heat the battery, the passenger compartment, and the like.

At present, the thermal management system of the electric vehicle is expensive and bulky.

### SUMMARY

Embodiments of this application provide a vehicle thermal management system, a drive apparatus, and an electric vehicle. A compressor of an air conditioner and a heat emitting resistor may be driven by using a single drive apparatus. This may reduce costs of a thermal management system of an electric vehicle.

According to a first aspect, an embodiment of this application provides a thermal management system for temperature control of an electric vehicle. The thermal management system includes: a motor, N resistor branches, and a driver configured to drive the motor and resistors on the N resistor branches to work, where N is a positive integer greater than 1. The motor is configured to rotate under an action of an alternating current, to drive the compressor of the air conditioner to work. The driver includes a control circuit and an inverter circuit. Each of N bridge arms of the inverter circuit is connected to one terminal of the motor, and different bridge arms are connected to different terminals. A midpoint of each of the N bridge arms is connected to one of the N resistor branches, and different bridge arms are connected to different resistor branches. A first switch is coupled between the midpoint of each bridge arm and the resistor branch connected to the bridge arm. The control circuit is configured to: control all first switches corresponding to the N bridge arms to be in an open state, and control the inverter circuit to output an alternating current to the motor. The control circuit is configured to: control all the first switches corresponding to the N bridge arms to be in a closed state, and control the inverter circuit to output currents to the N resistor branches.

In other words, the driver in the thermal management system provided in this embodiment of this application may be configured to drive the compressor of the air conditioner to work, and may be configured to drive a heat emitting resistor to work. Therefore, there is no need to separately set one set of drive apparatus for the compressor and the heat emitting resistor. This reduces costs of the thermal management system, saves space of the thermal management system, and reduces a volume of the thermal management system.

In a possible implementation, when a difference obtained by subtracting an energy efficiency ratio of the resistor from an energy efficiency ratio of the compressor is greater than or equal to a first threshold, the driver is configured to independently drive the motor to work, to drive the compressor.

That is, in this implementation, when the energy efficiency ratio of the compressor is greater than the energy efficiency ratio of the resistor, the driver may drive the compressor to work, without driving the resistor to work, to reduce energy consumption.

In a possible implementation, when the difference obtained by subtracting the energy efficiency ratio of the compressor from the energy efficiency ratio of the resistor is greater than or equal to a second threshold, the driver is configured to independently drive the resistor on the resistor branch to work.

That is, when the energy efficiency ratio of the resistor is greater than the energy efficiency ratio of the compressor, the driver may drive the resistor for heating, without driving the compressor for heating, to reduce energy consumption.

In a possible implementation, the driver further includes a second switch disposed between a first resistor branch and a battery, and the first resistor branch is one or more of the N resistor branches. The control circuit is configured to: control all the first switches corresponding to the N bridge arms to be in the open state, and control the second switch to enter the closed state, so that a resistor on the first resistor branch may obtain a current from the battery.

That is, in this implementation, by disposing the second switch, when all the first switches corresponding to the N bridge arms are open, the battery may supply power to one or more of the N resistor branches. In this way, simultaneous working of the compressor and the resistor can be controlled by the single driver.

In a possible implementation, the second switch includes one or more switches, and the one or more switches are in a one-to-one correspondence with the one or more resistor branches.

That is, one second switch may be disposed for each of the one or more resistor branches, so that a quantity of resistors working simultaneously with the compressor can be adjusted.

In a possible implementation, the second switch is disposed between the first resistor and a negative electrode of the battery.

That is, the second switch can be used as a low-side driver of the first resistor. This can improve security of the thermal management system, and further reduce the costs of the thermal management system.

In a possible implementation, when the difference between the energy efficiency ratio of the compressor and the energy efficiency ratio of the resistor falls within a preset range, the driver is configured to drive the compressor and one or more resistors on the one or more resistor branches to work simultaneously.

That is, in this implementation, when the energy efficiency ratio of the compressor is almost equal to the energy efficiency ratio of the resistor, both the air conditioner and the resistor may be used for heating.

In a possible implementation, a switch element on one side of the midpoint of the bridge arm is a third switch element coupled to a first electrode of the battery, and a switch element on the other side of the midpoint of the bridge arm is a fourth switch element coupled to a second electrode of the battery. The control circuit is configured to: control third switch elements on the N bridge arms to be opened simultaneously, and control fourth switch elements on the N bridge arms to be closed simultaneously, so that the inverter circuit outputs the currents to the N resistor branches.

That is, in this implementation, in the inverter circuit, the switch element on one side of each of the bridge arms is controlled to be opened simultaneously, and a switch element on the other side of each of the bridge arms is controlled to be closed simultaneously, so that the inverter circuit may be used as a power circuit of the resistor branch to output a current to the resistor branch.

In a possible implementation, the first electrode is a positive electrode of the battery, and the second electrode is the negative electrode of the battery. Alternatively, the first electrode is the negative electrode of the battery, and the second electrode is a positive electrode of the battery.

That is, in this implementation, lower bridge arms of the inverter circuit may be used as low-side drivers of the N resistor branches, or upper bridge arms of the inverter circuit may be used as high-side drivers of the N resistor branches. In this way, the N resistor branches can be flexibly controlled.

In a possible implementation, the control circuit is configured to control duration in which the fourth switch elements on the N bridge arms are in the closed state in a single pulse period, to control magnitudes of the currents output by the inverter circuit to the N resistors.

That is, in this implementation, duty cycles of the fourth switch elements may be controlled to control the magnitudes of the currents output to the N resistor branches, to flexibly control power of the N resistor branches.

In a possible implementation, the driver includes a relay, and the relay is used as the first switch corresponding to each of the N bridge arms; or the first switches corresponding to one or more of the N bridge arms are circuit breakers; or the first switches corresponding to one or more of the N bridge arms are insulated gate bipolar transistors IGBTs or metal oxide semiconductor field effect transistors MOSFETs.

That is, in this implementation, the switch elements between the inverter circuit and the heat emitting resistor may include a plurality of options, so that the driver can be flexibly designed.

In a possible implementation, the resistor in the N resistor branches is a positive temperature coefficient PTC resistor.

A resistance value of the PTC increases with an increase of a temperature. This has high security. In this implementation, the PTC is used as the heat emitting resistor, so that security of the thermal management system can be improved.

According to a second aspect, an embodiment of this application provides a drive apparatus. The drive apparatus includes a control circuit and an inverter circuit having N bridge arms, where N is a positive integer greater than 1. A midpoint of each of the N bridge arms is configured to connect to one terminal in a motor, and different bridge arms in the N bridge arms are connected to different terminals. The motor is configured to drive, when rotating, a compressor of an air conditioner to work, to enable the air conditioner to perform heating or cooling. The midpoint of each of the N bridge arms is configured to connect to one of N resistor branches, and different bridge arms in the N bridge arms are connected to different resistor branches. A first switch is coupled between the midpoint of each of the N bridge arms and the resistor branch connected to each bridge arm. One or more resistors are disposed on each of the N resistor branches, and the resistor is configured to convert electric energy into thermal energy. The control circuit is configured to: control all first switches corresponding to the N bridge arms to be in an open state, and control the inverter circuit to output an alternating current to the motor. The control circuit is configured to: control all the first switches corresponding to the N bridge arms to be in a closed state, and control the inverter circuit to output currents to the N resistor branches.

In a possible implementation, when a difference obtained by subtracting an energy efficiency ratio of the resistor from an energy efficiency ratio of the compressor is greater than or equal to a first threshold, the control circuit is configured to: control all the first switches corresponding to the N bridge arms to be in the open state, and control the inverter circuit to output the alternating current to the motor.

In a possible implementation, when a difference obtained by subtracting the energy efficiency ratio of the compressor from the energy efficiency ratio of the resistor is greater than or equal to a second threshold, the control circuit is configured to: control all the first switches corresponding to the N bridge arms to be in the closed state, and control the inverter circuit to output the currents to the N resistor branches.

In a possible implementation, the drive apparatus further includes a second switch disposed between a first resistor branch and a battery, and the first resistor branch is one or more of the N resistor branches. The control circuit is configured to: control all the first switches corresponding to the N bridge arms to be in the open state, and control the second switch to enter the closed state, so that a resistor on the first resistor branch obtains a current from the battery.

In a possible implementation, the second switch includes one or more switches, and the one or more switches are in a one-to-one correspondence with the one or more resistor branches.

In a possible implementation, the second switch is disposed between the first resistor branch and a negative electrode of the battery.

In a possible implementation, when a difference between the energy efficiency ratio of the compressor and the energy efficiency ratio of the resistor falls within a preset range, the control circuit is configured to: control all the first switches corresponding to the N bridge arms to be in the open state, and control the second switch to enter the closed state, so that the resistor on the first resistor branch obtains the current from the battery.

In a possible implementation, a switch element on one side of the midpoint of the bridge arm is a third switch element coupled to a first electrode of the battery, and a switch element on the other side of the midpoint of the bridge arm is a fourth switch element coupled to a second electrode of the battery. The control circuit is configured to: control third switch elements on the N bridge arms to be opened simultaneously, and control fourth switch elements on the N bridge arms to be closed simultaneously, so that the inverter circuit outputs the currents to the N resistor branches.

In a possible implementation, the first electrode is a positive electrode of the battery, and the second electrode is the negative electrode of the battery. Alternatively, the first electrode is the negative electrode of the battery, and the second electrode is a positive electrode of the battery.

In a possible implementation, the control circuit is configured to control duration in which the fourth switch elements on the N bridge arms are in the closed state in a single pulse period, to control magnitudes of the currents output by the inverter circuit to the N resistor branches.

In a possible implementation, the drive apparatus includes a relay, and the relay is used as the first switch corresponding to each of the N bridge arms; or the first switches corresponding to one or more of the N bridge arms are circuit breakers; or the first switches corresponding to one or more of the N bridge arms are insulated gate bipolar transistors IGBTs or metal oxide semiconductor field effect transistors MOSFETs.

It may be understood that the drive apparatus provided in the second aspect may be configured to drive the compressor and the motor of the thermal management system provided in the first aspect. For beneficial effect of the drive apparatus, refer to the foregoing descriptions of beneficial effect of the thermal management system provided in the first aspect.

According to a third aspect, an embodiment of this application provides an electric vehicle, including the thermal management system provided in the first aspect or the drive apparatus provided in the second aspect.

According to the thermal management system and the drive apparatus provided in embodiments of this application, a single drive apparatus or driver may be used to drive the compressor and the heat emitting resistor. This reduces use of electronic components and lines, reduces the costs of the thermal management system, and saves the space of the thermal management system, so that the volume of the thermal management system can be designed to be smaller. In addition, no additional high and low voltage separation is required, and this further reduces the costs of the thermal management system.

### BRIEF DESCRIPTION OF DRAWINGS

FIG. 1 is a schematic diagram of a structure of a drive apparatus for driving a compressor to work;
FIG. 2 is a schematic diagram of a structure of a drive apparatus for driving a PTC to work;
FIG. 3A is a schematic diagram of a structure of a thermal management system according to an embodiment of this application;
FIG. 3B is a schematic diagram of a structure of a thermal management system according to an embodiment of this application;
FIG. 3C is a schematic diagram of a structure of a resistor branch shown in FIG. 3A or FIG. 3B;
FIG. 3D is a schematic diagram of a structure of a resistor branch shown in FIG. 3A or FIG. 3B;
FIG. 4 is a schematic diagram of a working principle of a thermal management system in an independent working mode of a compressor according to an embodiment of this application;
FIG. 5A is a simulation diagram of an input current of a motor of a compressor in a mode in which the compressor works independently;
FIG. 5B is a simulation diagram of an input current of a heat emitting resistor in a mode in which a compressor works independently;
FIG. 6 is a schematic diagram of a working principle of a thermal management system in a mode in which a heat emitting resistor works independently according to an embodiment of this application;
FIG. 7A is a simulation diagram of an input current of a motor of a compressor in a mode in which a heat emitting resistor works independently;
FIG. 7B is a simulation diagram of an input current of each resistor in a heat emitting resistor in a mode in which the heat emitting resistor works independently;
FIG. 8 is a schematic diagram of a working principle of a thermal management system in a mode in which a compressor and a heat emitting resistor work simultaneously according to an embodiment of this application;
FIG. 9A is a simulation diagram of an input current of a motor of a compressor in a mode in which the compressor and a heat emitting resistor work simultaneously;
FIG. 9B is a simulation diagram of an input current of each resistor in a heat emitting resistor in a mode in which a compressor and the heat emitting resistor work simultaneously; and
FIG. 10 is a schematic diagram of a structure of a thermal management system according to an embodiment of this application.

### DESCRIPTION OF EMBODIMENTS

The following describes technical solutions of embodiments in this application with reference to accompanying drawings.

In general, a battery (for example, a power battery) of an electric vehicle needs to work within a suitable temperature range. If a temperature of the battery is excessively high, a service life of the battery is affected and a security risk may be caused. If a temperature of the battery is excessively low, an available capacity of the battery may be greatly attenuated. This limits performance of the battery. Therefore, when the battery works, the temperature of the battery needs to be maintained within a specific range. In addition, unlike a conventional fuel vehicle, which may heat a passenger compartment by using cooling water of an engine, an electric vehicle needs to heat a passenger compartment and another component by using electric energy of a battery.

In view of the above reasons, a thermal management system of the electric vehicle is more important and demanding than a thermal management system of the conventional fuel vehicle.

Generally, the thermal management system of the electric vehicle includes a water loop, a coolant circuit, a temperature and pressure sensor, a water valve, a solenoid valve, a water pump, a compressor of an air conditioner, an air conditioning box, a positive temperature coefficient (positive temperature coefficient, PTC) resistor, and the like, to heat or cool the battery and the passenger compartment of the electric vehicle, and cool an electric drive unit, an on-board charger, and the like.

In this embodiment of this application, the electric vehicle may be a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), a new energy vehicle (new energy vehicle, NEV), or the like.

The compressor of the air conditioner may be referred to as a compressor for short. It can be understood that, generally speaking, an energy efficiency ratio of the compressor is high, and may reach about 3: 1. In other words, the compressor may transfer about 3 kilowatts of heat while consuming 1 kilowatt of electricity. However, at a lower ambient temperature, the energy efficiency ratio of the compressor is decreased. For example, an energy efficiency ratio of a compressor using R134A refrigerant as a coolant is only about 1:1 at an ambient temperature of about minus 7°C. As the ambient temperature decreases, the energy efficiency ratio of the compressor is further decreased. At an extremely low ambient temperature, the coolant of the compressor may not be able to build up pressure. Specifically, temperatures of a condenser and a reservoir of the compressor are so low that there is not enough pressure to feed a liquid coolant into an evaporator when the compressor is started.

The PTC may be configured to heat water in the water loop, so that other components can be heated by using the water loop. A resistance value of the PTC increases with an increase of a temperature. This has high security. At an extremely low ambient temperature, the thermal management system may heat the battery and the like by using the PTC. At a lower ambient temperature, the compressor and the PTC can be used simultaneously to heat the battery and the like. At a high ambient temperature, the compressor can be used independently to heat or cool the battery and the like.

It may be understood that the extremely low ambient temperature, the low ambient temperature, and the high ambient temperature respectively correspond to different temperature ranges. For compressors using different coolants, temperature ranges corresponding to the extremely low ambient temperature may be different, temperature ranges corresponding to the low ambient temperature may also be different, and temperature ranges corresponding to the high ambient temperature may also be different. For example, for the compressor using R134A refrigerant as the coolant, the extremely low ambient temperature may be below minus 15°C, the low ambient temperature may range from minus 15°C to minus 7°C, and the high ambient temperature may be above minus 7°C.

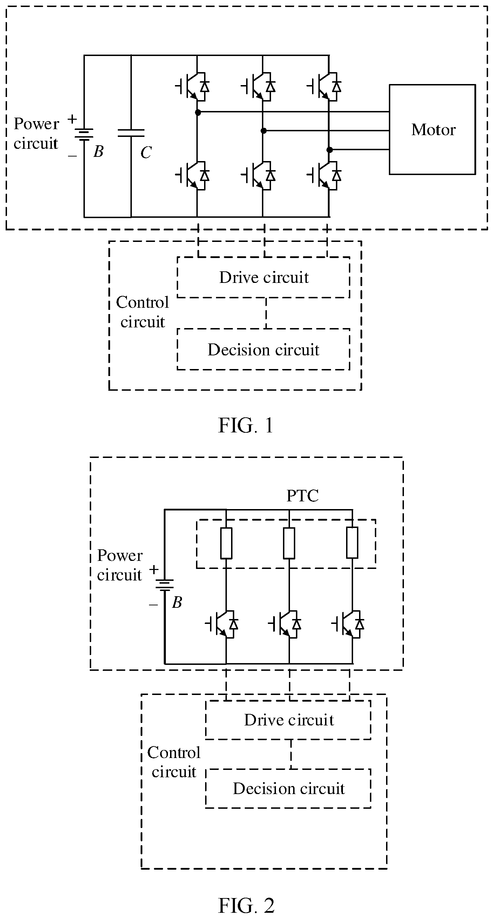

In a solution, the thermal management system controls the compressor and the PTC by using two independent drive apparatuses. A drive apparatus for controlling the compressor may be shown in FIG. 1, and a drive apparatus for controlling the PTC may be shown in FIG. 2. In this solution, the compressor requires one drive apparatus and the PTC requires another drive apparatus. The thermal management system of the electric vehicle needs to provide space for accommodating the two drive apparatuses. This results in a larger volume of the thermal management system. Moreover, power of the compressor and power of the PTC are about 8 kilowatts, requiring high voltage power supply. In other words, each of a power circuit of the drive apparatus of the compressor and a power circuit of the drive apparatus of the PTC needs to use a high-voltage power supply harness and a matching connector, fuse, and the like, so that circuit costs are high. In addition, each of the drive apparatus of the compressor and the drive apparatus of the PTC requires high and low voltage isolation between the power circuit and a control circuit. This also increases costs of the thermal management system.

An embodiment of this application provides a thermal management system. One driver may be used to drive a compressor and a heat emitting resistor to work, so that costs of the thermal management system can be reduced, and a volume of the thermal management system can be reduced.

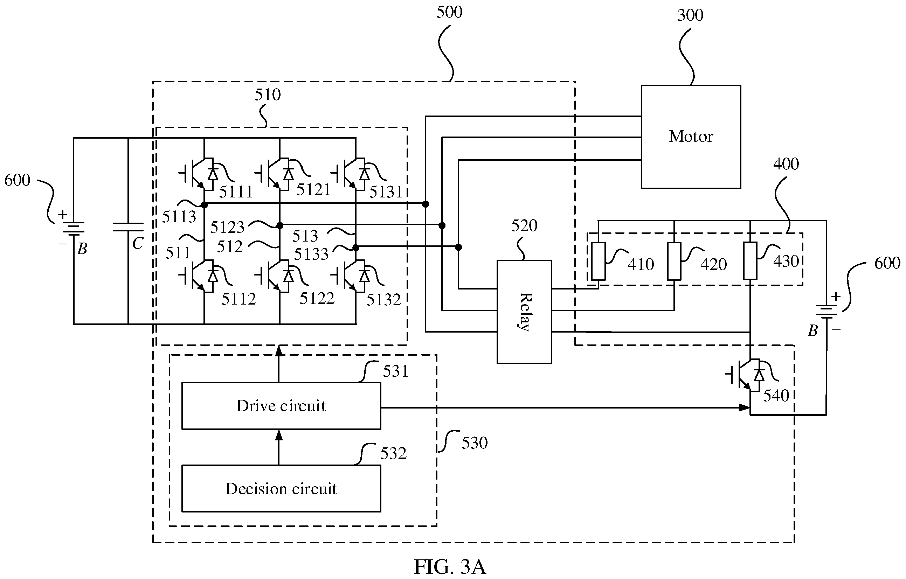

FIG. 3A illustrates one example of the thermal management system. In this example, the thermal management system may include a motor 300. The motor 300 may rotate under driving of an alternating current, to drive a compressor of an air conditioner to work, so that the air conditioner can perform cooling or heating. The motor 300 may have N terminals. N is a positive integer greater than 1. The N terminals may receive alternating currents to drive the motor 300 to rotate. For example, N may be 3, and the three terminals of the motor 300 are respectively a U-phase terminal, a V-phase terminal, and a W-phase terminal.

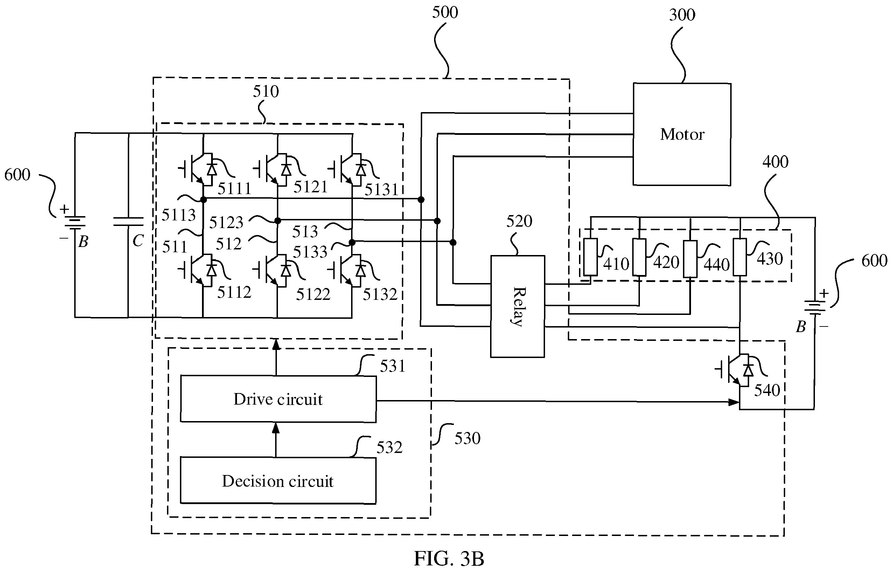

The thermal management system may include a heat emitting resistor 400. The heat emitting resistor 400 may include N resistor branches, and the N resistor branches may be disposed in parallel. That is, different resistor branches in the N resistor branches are connected in parallel. When a power supply is connected, a resistor in the N resistor branches may convert electric energy into thermal energy, to dissipate heat. For example, as shown in FIG. 3A, the N resistor branches may include a resistor branch 410, a resistor branch 420, and a resistor branch 430. For example, as shown in FIG. 3B, the N resistor branches may include a resistor branch 410, a resistor branch 420, a resistor branch 430, and a resistor branch 440. It may be understood that, the heat emitting resistors 400 shown in FIG. 3A and FIG. 3B are merely examples for description of a quantity of resistor branches included in the thermal management system, and are not intended to impose limitations. The thermal management system may further include another quantity of resistor branches, for example, five resistor branches or six resistor branches, which are not listed one by one herein.

In some embodiments, a resistor on a resistor branch of the N resistor branches may be a PTC.

In some embodiments, one resistor may be disposed on one of the N resistor branches.

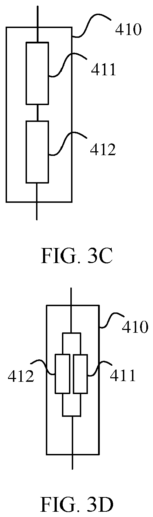

In some embodiments, a plurality of resistors may be disposed on one of the N resistor branches. For example, a plurality of resistors on a same resistor branch may be disposed in series. In an example, as shown in FIG. 3C, the resistor branch 410 may be composed of a resistor 411 and a resistor 412 that are connected in series. In other words, the circuit branch 410 is provided with the resistor 411 and the resistor 412 that are disposed in series. For example, a plurality of resistors on a same resistor branch may be disposed in parallel. In an example, as shown in FIG. 3D, the resistor branch 410 may be composed of a resistor 411 and a resistor 412 that are connected in parallel.

The thermal management system may include a driver 500, which may be configured to control rotation of the motor 300 and control the heat emitting resistor 400 to emit heat. The driver 500 may include an inverter circuit 510. The inverter circuit 510 may include 2N switch elements, and every two switches may be disposed in series to form a bridge arm or an arm. The 2N switch elements may form N bridge arms. Different bridge arms in the inverter circuit 510 are disposed in parallel. One switch element on each bridge arm is coupled to a positive electrode of a battery 600, and the other switch element on the bridge arm is coupled to a negative electrode of the battery. In other words, one switch element on each bridge arm is closer to the positive electrode of the battery 600 and the other switch element on the bridge arm is closer to the negative electrode of the battery 600 in an electrical circuit. The switch element coupled to the positive electrode of the battery is a switch element on a positive electrode side of the battery, or a switch element close to the positive electrode of the battery in the electrical circuit. The switch element coupled to the negative electrode of the battery is a switch element on a negative electrode side of the battery, or a switch element close to the negative electrode of the battery in the electrical circuit. For a bridge arm, a switch element coupled to the positive electrode of the battery may be referred to as an upper bridge arm or an upper transistor of the bridge arm, and a switch element coupled to the negative electrode of the battery may be referred to as a lower bridge arm or a lower transistor of the bridge arm. A point between the two switch elements on each bridge arm may be referred to as a midpoint. That is, for a bridge arm, a midpoint is between a lower bridge arm and an upper bridge arm of the bridge arm.

In some embodiments, the switch element included in the inverter circuit 510 may be an element made of semiconductor silicon, for example, an insulated gate bipolar transistor (insulated gate bipolar transistor, IGBT), a metal-oxide-semiconductor field effect transistor (metal-oxide-semiconductor field effect transistor, MOSFET), and the like. Other examples are not listed one by one herein.

In some embodiments, as shown in FIG. 3A, the inverter circuit 510 may include three bridge arms, that is, the inverter circuit 510 may be a three-phase bridge circuit. Specifically, the inverter circuit 510 may include a bridge arm 511, a bridge arm 512, and a bridge arm 513. The bridge arms are disposed in parallel. The bridge arm 511 is provided with a switch element 5111 and a switch element 5112. The switch element 5111 and the switch element 5112 are disposed in series, where the switch element 5111 is coupled to the positive electrode of the battery 600, and the switch element 5112 is coupled to the negative electrode of the battery 600. There is a midpoint 5113 between the switch element 5111 and the switch element 5112. The bridge arm 512 is provided with a switch element 5121 and a switch element 5122. The switch element 5121 and the switch element 5122 are disposed in series, where the switch element 5121 is coupled to the positive electrode of the battery 600, and the switch element 5122 is coupled to the negative electrode of the battery 600. There is a midpoint 5123 between the switch element 5121 and the switch element 5122. The bridge arm 513 is provided with a switch element 5131 and a switch element 5132. The switch element 5131 and the switch element 5132 are disposed in series, where the switch element 5131 is coupled to the positive electrode of the battery 600, and the switch element 5132 is coupled to the negative electrode of the battery 600. There is a midpoint 5133 between the switch element 5131 and the switch element 5132.

Next, a connection manner between the inverter circuit 510 and the motor 300 is described.

Refer to FIG. 3A. The midpoint of each bridge arm may be connected to one of the N terminals of the motor 300. Midpoints of different bridge arms are connected to different terminals. That is, a bridge arm in the N bridge arms is in a one-to-one correspondence with a terminal in the N terminals, and the midpoint of each bridge arm may be connected to a terminal corresponding to the bridge arm. For example, N is 3. As shown in FIG. 3A, the midpoint 5113 may be connected to one terminal of the motor 300, the midpoint 5123 may be connected to another terminal of the motor 300, and the midpoint 5133 is connected to a remaining terminal of the motor 300.

Next, a connection manner between the inverter circuit 510 and the heat emitting resistor 400 is described.

Refer to FIG. 3A. The midpoint of each bridge arm may be connected to one of the N resistor branches of the heat emitting resistor 400. Midpoints of different bridge arms are connected to different resistor branches. In other words, a bridge arm in the N bridge arms is in a one-to-one correspondence with a resistor branch in the N resistor branches, and the midpoint of each bridge arm may be connected to a resistor branch corresponding to the bridge arm. For example, N is 3. As shown in FIG. 3A, the resistor branch 430 corresponds to the bridge arm 511, and the midpoint 5113 may be connected to the resistor branch 430. The resistor branch 420 corresponds to the bridge arm 512, and the midpoint 5123 may be connected to the resistor branch 420. The resistor branch 410 corresponds to the bridge arm 513, and the midpoint 5133 is connected to the resistor branch 410. It may be understood that the midpoint of each bridge arm is connected to one end of the corresponding resistor branch, and the other end of the resistor branch is directly connected to the battery 600. One end of the resistor branch connected to the midpoint of the bridge arm may be referred to as a D1 end, and one end directly connected to the battery may be referred to as a D2 end. For example, the D2 end may be a positive electrode end of the resistor branch, that is, the resistor branch is directly connected to the positive electrode of the battery 600. The D1 end may be a negative electrode end of the resistor, that is, the resistor branch is indirectly connected to the negative electrode of the battery 600 through the midpoint of the bridge arm. Therefore, the related switch element in the inverter circuit 510 may be used as a low-side driver, to control a current output from the battery 600 to the resistor branch. For example, the D1 end of the resistor may be a negative electrode end of the resistor branch, and the D2 end of the resistor may be a positive electrode end of the resistor branch. Therefore, the related switch element in the inverter circuit 510 may be used as a high-side driver, to control a current output from the battery 600 to the resistor branch.

Each bridge arm of the inverter circuit 510 may further correspond to one switch element S (not shown). Each switch element S may be disposed on a connection line between a midpoint of a corresponding bridge arm and a resistor branch corresponding to the bridge arm. When a switch element S is closed, a midpoint of a bridge arm corresponding to the switch element S is connected to a corresponding resistor branch corresponding to the bridge arm. When a switch element S is open, a midpoint of a bridge arm corresponding to the switch element S is disconnected from a resistor branch corresponding to the bridge arm. For example, the switch element S corresponding to each bridge arm of the inverter circuit 510 may be integrated into a repeater 520. In other words, the relay 520 may be disposed between the inverter circuit 510 and the heat emitting resistor 400, and may be configured to control connection or disconnection between the midpoint of each bridge arm in the inverter circuit 510 and the corresponding resistor branch in the heat emitting resistor 400. In other words, the relay 520 may be used as the switch element S corresponding to each of the N bridge arms of the inverter circuit 510, in other words, switch elements S corresponding to the N bridge arms may be integrated into the relay 520.

In some embodiments, as shown in FIG. 3A, one or more D1 ends of one or more resistor branches (for example, the resistor branch 430) in the heat emitting resistor 400 may further be directly connected to the battery 600, and a switch element 540 is disposed on a connection line between the D1 end and the battery 600. An electrode of the battery 600 connected to the one or more D1 ends of the one or more resistor branches is different from an electrode of the battery 600 connected to one or more D2 ends of the one or more resistor branches. When the one or more D2 ends of the one or more resistor branches are connected to the positive electrode of the battery 600, the one or more D1 ends of the one or more resistor branches are connected to the negative electrode of the battery 600. When the one or more D2 ends of the one or more resistor branches are connected to the negative electrode of the battery 600, the one or more D1 ends of the one or more resistor branches are connected to the positive electrode of the current 600.

Still refer to FIG. 3A. The driver 500 may further include a control circuit 530. The control circuit 530 may control an open state or a closed state of each switch element in the driver 500. Switch elements in the driver 500 may include the switch elements in the inverter circuit 510, the switch elements S between the inverter circuit 510 and the heat emitting resistor 400, and the switch element 540. Therefore, the control circuit 530 may control a current output from the battery 600 to the motor 300, and control a current output from the battery 600 to the heat emitting resistor 400. Controlling the open state or the closed state of the switch element may specifically mean controlling the switch element to be opened or closed, to disconnect or connect an electrical circuit in which the switch element is located.

In some embodiments, as shown in FIG. 3A, the control circuit 530 may include a drive circuit 531 and a decision circuit 532. The decision circuit 532 may generate a control instruction, and send the control instruction to the drive circuit 531. The drive circuit 531 may control the open state or the closed state of each switch element in the driver 500 based on the control instruction. For example, the control instruction may be a low-voltage (for example, 5 V) logic signal. The drive circuit 531 may amplify the low-voltage logic signal into a high-voltage (for example, 15 V) signal that can drive the switch element to be opened or closed.

The foregoing describes an example of a structure of the thermal management system provided in this embodiment of this application. The thermal management system may be in a mode in which the compressor works independently, that is, the motor 300 is independently controlled by the driver 500. The thermal management system may alternatively be in a mode in which the heat emitting resistor works independently, that is, the heat emitting resistor 400 is independently controlled by the driver 500.

The following describes examples of the foregoing various control modes with reference to the accompanying drawings.

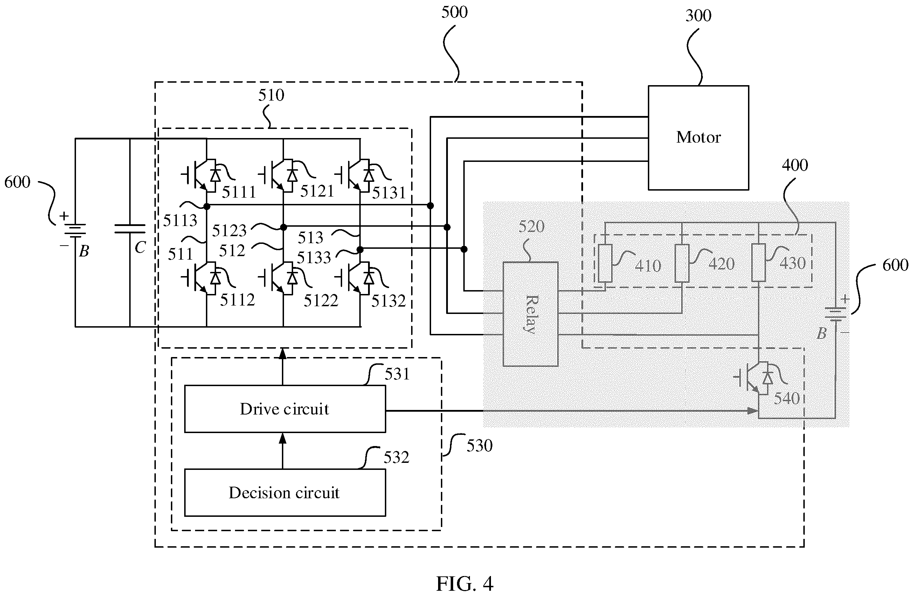

Refer to FIG. 4. The thermal management system may be in the mode in which the compressor works independently. As mentioned above, the energy efficiency ratio of the compressor is affected by the ambient temperature of the compressor. If the ambient temperature of the compressor is high, the energy efficiency ratio of the compressor may be greater than 1 (that is, 1:1), for example, may reach about 3 (that is, 3:1). It can be understood that a heat emitting principle of the resistor is to convert electric energy into thermal energy. Under an ideal condition, an energy efficiency ratio of the resistor may be 1. However, in actual application, limited by a line loss and the like, the energy efficiency ratio of the resistor is usually about 0.9. The energy efficiency ratio of the resistor can be set to a fixed value, for example, 0.9. In this embodiment of this application, when the energy efficiency ratio of the compressor is greater than the energy efficiency ratio of the resistor, the thermal management system may use the mode in which the compressor works independently, to reduce energy consumption.

In some embodiments, the control circuit 530 may determine whether a difference obtained by subtracting the energy efficiency ratio of the resistor from the energy efficiency ratio of the compressor is greater than or equal to a threshold Y1. If the difference is greater than or equal to the threshold Y1, the thermal management system may be controlled to enter the mode in which the compressor works independently. The threshold Y1 may be preset, for example, may be 0.1, or 0.2. Other examples are not listed one by one herein. For example, the energy efficiency ratio of the compressor may be determined by the ambient temperature of the compressor. For example, a one-to-one correspondence between a temperature in a plurality of temperatures and an energy efficiency ratio in a plurality of energy efficiency ratios may be set. The control circuit 530 may obtain a current ambient temperature of the compressor, then determine a current energy efficiency ratio of the compressor based on the ambient temperature and the correspondence, and further determine whether the difference obtained by subtracting the energy efficiency ratio of the resistor from the current energy efficiency ratio of the compressor is greater than or equal to the threshold Y1. If the difference is greater than or equal to the threshold Y1, the thermal management system may be controlled to enter the mode in which the compressor works independently. For example, it may be understood that the compressor may have different energy efficiency ratios at a same ambient temperature due to different coolants. The energy efficiency ratio of the compressor may be determined based on the coolant of the compressor and the ambient temperature of the compressor. For example, an energy efficiency ratio corresponding to each of a plurality of coolants at a plurality of different temperatures may be set or recorded. When a coolant currently used by the compressor and the current ambient temperature are obtained, a current energy efficiency ratio of the compressor may be determined. Further, whether the difference obtained by subtracting the energy efficiency ratio of the resistor from the current energy efficiency ratio of the compressor is greater than or equal to the threshold Y1 may be determined. If the difference is greater than or equal to the threshold Y1, the thermal management system may be controlled to enter the mode in which the compressor works independently.

The ambient temperature of the compressor described above refers to a temperature of an environment in which the compressor is located. For example, a temperature sensor may be disposed near the compressor. The temperature sensor may send a collected temperature to the control circuit 530 in real time, or send a recently collected temperature to the control circuit 530 at a time interval T. For example, the ambient temperature of the compressor may be a vehicle exterior ambient temperature of a vehicle in which the compressor is located. In this example, a vehicle exterior ambient temperature sensor of the vehicle may send a collected temperature to the control circuit 530 in real time, or send a recently collected temperature to the control circuit 530 at a time interval T.

In the mode in which the compressor works independently, the control circuit 530 may control the switch elements S between the inverter circuit 510 and the heat emitting resistor 400 to be opened and the switch element 540 to be opened. For example, as shown in FIG. 4, controlling the switch elements S between the inverter circuit 510 and the heat emitting resistor 400 to be opened may specifically mean controlling the relay 520 to be opened. Then, the control circuit 530 may control closing and opening of each switch element in the inverter circuit 510, to change a direct current output by the battery 600 into an alternating current, so as to drive the motor 300 to rotate. A structure of the inverter circuit 510 shown in FIG. 4 is used as an example. When the switch element 5111 and the switch element 5112 are closed, and another switch element of the inverter circuit 510 is open, a direction of a current output by the inverter circuit 510 to the motor 300 is a direction F 1. When the switch element 5121 and the switch element 5112 are closed, and another switch element of the inverter circuit 510 is open, a direction of a current output from the inverter circuit 510 to the motor 300 is a direction F2. Based on the structure of the inverter current 510 and the connection manner of the inverter circuit 510 and the motor 300 shown in FIG. 4, the direction F2 is opposite to the direction F1. In this way, the alternating current can be generated. It should be noted that, the foregoing description is merely an example of a process in which the inverter circuit 510 converts the direct current into the alternating current, and is not intended to impose a limitation. Different switch elements in the inverter circuit 510 may be closed or opened under control of the control circuit 530, and another form of alternating current or a more complex alternating current may be generated. For details, refer to the descriptions of the inverter circuit in a conventional technology. Details are not described one by one herein.

In some embodiments, the control circuit 530 may control, by controlling a duty cycle of the inverter circuit 510, a magnitude of the current output by the inverter circuit 510 to the motor 300, to control power of the motor 300. The duty cycle refers to a ratio of power-on duration in a pulse period to total duration of the pulse period. A pulse period refers to duration between a start moment of one power-on and a start moment of next power-on in a case of intermittent or periodic power-on. A current magnitude of the alternating current may be an average current value in a pulse period. Therefore, the magnitude of the alternating current can be controlled by controlling a value of the duty cycle. For example, when a circuit is powered on, a current magnitude of a current output by the circuit may be set to 100 A. A duty cycle of the circuit may also be set to 25%, that is, in a pulse period, the circuit is powered on in 25% of duration, and is not powered on in remaining 75% of duration. In this case, in a pulse period, a magnitude of a current output by the circuit is 25 A. In this way, an alternating current of any magnitude can be output to the motor 300 by controlling the duty cycle of the inverter circuit 510.

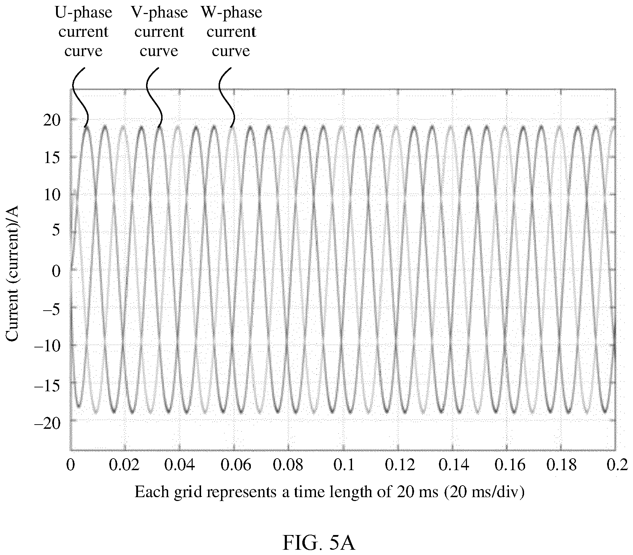

In a specific example, the control circuit 530 may output an alternating current shown in FIG. 5A to the motor 300 by controlling the inverter circuit 510, where a current amplitude is 19 A. The alternating current shown in FIG. 5A is merely an example for description. In this embodiment of this application, the control circuit 530 may control the inverter circuit 510 to input any expected current to the motor 300. For a manner of controlling the current magnitude, refer to the foregoing descriptions. Details are not described herein again.

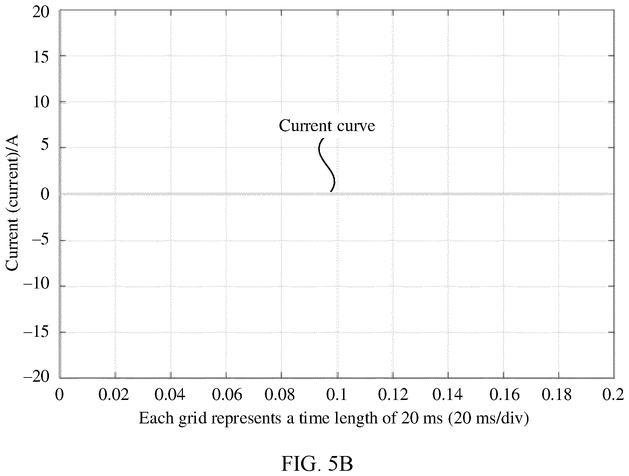

In addition, as described above, in the mode in which the compressor works independently, the relay 520 and the switch element 540 are open. Therefore, each resistor in the heat emitting resistor 400 is not powered on, that is, the battery 600 does not input a current to each resistor in the heat emitting resistor. A current at each resistor in the heat emitting resistor 400 is zero, which may be specifically shown in FIG. 5B.

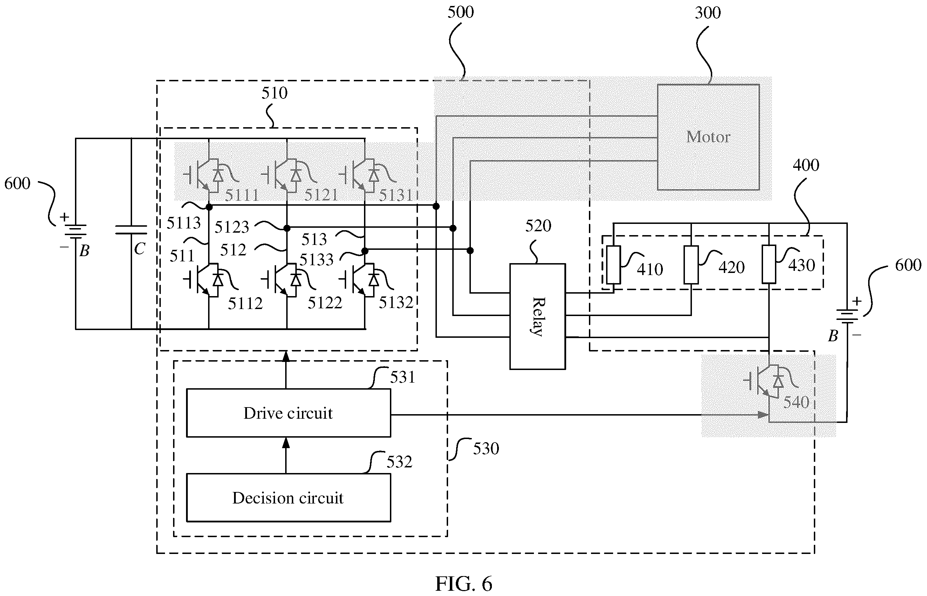

Refer to FIG. 6. The thermal management system may be in the mode in which the heat emitting resistor works independently. If the ambient temperature of the compressor is low, the energy efficiency ratio of the compressor may be less than 1: 1 or even lower than an energy efficiency ratio of the resistor. For a manner of determining the energy efficiency ratio of the compressor and the energy efficiency ratio of the resistor, refer to the foregoing descriptions. Details are not described herein again. In this embodiment of this application, when the energy efficiency ratio of the compressor is less than the energy efficiency ratio of the resistor, the thermal management system may use the mode in which the heat emitting resistor works independently, to reduce energy consumption.

In some embodiments, the control circuit 530 may determine whether a difference obtained by subtracting the energy efficiency ratio of the compressor from the energy efficiency ratio of the resistor is greater than or equal to a threshold Y2. If the difference is greater than or equal to the threshold Y2, the thermal management system may be controlled to enter the mode in which the heat emitting resistor works independently. The threshold Y2 may be preset, for example, may be 0.1, or 0.2. Other examples are not listed one by one herein.

In the mode in which the heat emitting resistor works independently, the control circuit 530 may control the switch elements S between the inverter circuit 510 and the heat emitting resistor 400 to be closed, control all upper bridge arms (or lower bridge arms) in the inverter circuit 510 to be opened simultaneously, and control all lower bridge arms (or upper bridge arms) in the inverter circuit 510 to be closed simultaneously, to enable the battery 600 to be connected to the heat emitting resistor 400, so as to output a current to the heat emitting resistor 400, so that the heat emitting resistor generates heat.

Next, a working manner of the driver 500 in the mode in which the heat emitting resistor works independently is specifically described.

In some embodiments, the inverter circuit 510 may be used as a low-side driver of the heat emitting resistor 400, to enable the heat emitting resistor 400 to be connected to the battery 600. Specifically, when the thermal management system is in the mode in which the heat emitting resistor works independently, all the upper bridge arms in the inverter circuit 510 are in an open state, and the switch elements S between the inverter circuit 510 and the heat emitting resistor 400 are in a closed state. All the lower bridge arms in the inverter circuit 510 are closed simultaneously, so that a voltage difference between different terminals of the motor 300 is zero, and no current input is generated. Simultaneous closing of all the lower bridge arms in the inverter circuit 510 enables the resistor in the heat emitting resistor 400 to be connected to the battery 600, to obtain electric energy from the battery 600, and further generate heat.

In an illustrative example of these embodiments, the control circuit 530 may control a duty cycle of the lower bridge arm of the inverter circuit 510, to control a magnitude of a current input to the heat emitting resistor 400. For details of the duty cycle, refer to the foregoing descriptions. Details are not described herein again. It should be noted that, when controlling the duty cycle of the lower bridge arm of the inverter circuit 510, the control circuit 530 needs to control all the lower bridge arms of the inverter circuit 510 to be closed simultaneously, then control all the lower bridge arms of the inverter circuit 510 to be opened simultaneously, then control all the lower bridge arms of the inverter circuit 510 to be closed simultaneously, and so on. In this way, the voltage difference between different terminals of the motor 300 is always zero while the current input to the heat emitting resistor 400 is controlled.

In an illustrative example of these embodiments, with reference to FIG. 6, an example of a case in which the inverter circuit 510 may be used as the low-side driver of the heat emitting resistor 400 is described. During duration in which the thermal management system is in the mode in which the heat emitting resistor works independently, the switch element 5111, the switch element 5121 and the switch element 5131 are all in the open state, and the relay 520 is in the closed state. The switch element 5112, the switch element 5122, and the switch element 5132 are closed simultaneously, or alternately closed simultaneously and opened simultaneously, so that the heat emitting resistor 400 can obtain electric energy from the battery 600, and further generate heat.

In some embodiments, the inverter circuit 510 may be used as a high-side driver of the heat emitting resistor 400, to enable the heat emitting resistor 400 to be connected to the battery 600. Specifically, when the thermal management system is in the mode in which the heat emitting resistor works independently, all the lower bridge arms in the inverter circuit 510 are in an open state, and the switch elements S between the inverter circuit 510 and the heat emitting resistor 400 are in a closed state. All the upper bridge arms in the inverter circuit 510 are closed simultaneously, so that a voltage difference between different terminals of the motor 300 is zero, and no current input is generated. Simultaneous closing of all the upper bridge arms in the inverter circuit 510 enables the resistor in the heat emitting resistor 400 to be connected to the battery 600, to obtain electric energy from the battery 600, and further generate heat.

In an illustrative example of these embodiments, the control circuit 530 may control a duty cycle of the upper bridge arm of the inverter circuit 510, to control a magnitude of a current input to the heat emitting resistor 400. For details of the duty cycle, refer to the foregoing descriptions. Details are not described herein again. It should be noted that, when controlling the duty cycle of the upper bridge arm of the inverter circuit 510, the control circuit 530 needs to control all the upper bridge arms of the inverter circuit 510 to be closed simultaneously, then control all the upper bridge arms of the inverter circuit 510 to be opened simultaneously, then control all the upper bridge arms of the inverter circuit 510 to be closed simultaneously, and so on. In this way, the voltage difference between different terminals of the motor 300 is always zero while the current input to the heat emitting resistor 400 is controlled.

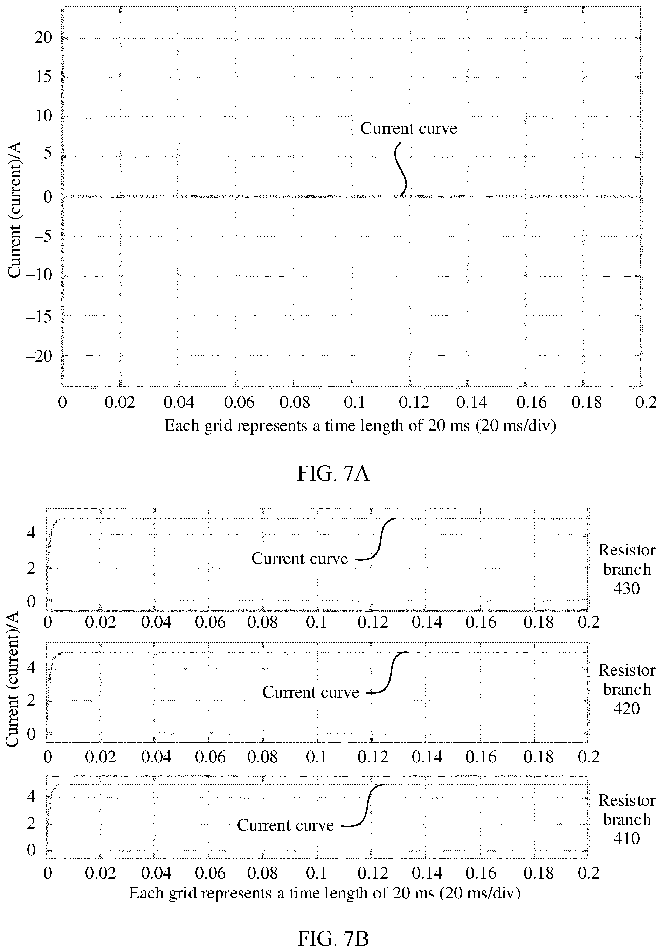

In a specific example, specifically, as shown in FIG. 7A, an input current of the motor 300 may be zero. Specifically, as shown in FIG. 7B, an input current of each resistor in the heat emitting resistor 400 is not zero.

According to the foregoing solutions, the thermal management system may drive the compressor to work and drive the heat emitting resistor to work by using a single driver, so that space of the thermal management system can be saved, and costs of the thermal management system can be reduced.

In some embodiments, when the one or more D1 ends of the one or more resistor branches (for example, the resistor branch 430) in the heat emitting resistor 400 are directly connected to the battery 600, and the switch element 540 is disposed on the connection line between the D1 end and the battery 600 (for details, refer to the foregoing descriptions of the embodiment shown in FIG. 3A), the thermal management system may alternatively be in a mode in which the compressor and the heat emitting resistor work simultaneously, that is, the driver 500 controls the motor 300 and the heat emitting resistor 400 to work simultaneously.

When a difference between the energy efficiency ratio of the compressor and an energy efficiency ratio of the resistor is small, the thermal management system may use the mode in which the compressor and the heat emitting resistor work simultaneously. Specifically, a range or an interval may be preset, for example, an interval (-0.1, 0.1) or an interval (-0.2, 0.2). Other examples are not listed one by one herein. When the difference between the energy efficiency ratio of the compressor and the energy efficiency ratio of the resistor falls within the foregoing preset interval, the thermal management system may enter the mode in which the compressor and the heat emitting resistor work simultaneously.

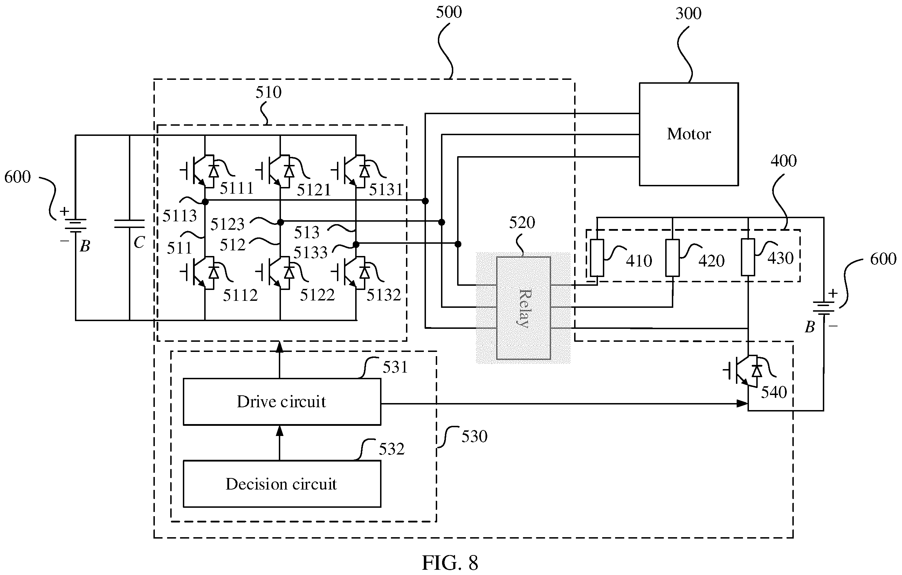

Refer to FIG. 8. When the thermal management system is in the mode in which the compressor and the heat emitting resistor work simultaneously, the switch elements S or the relay 520 between the inverter circuit 510 and the heat emitting resistor 400 are/is in a closed state.

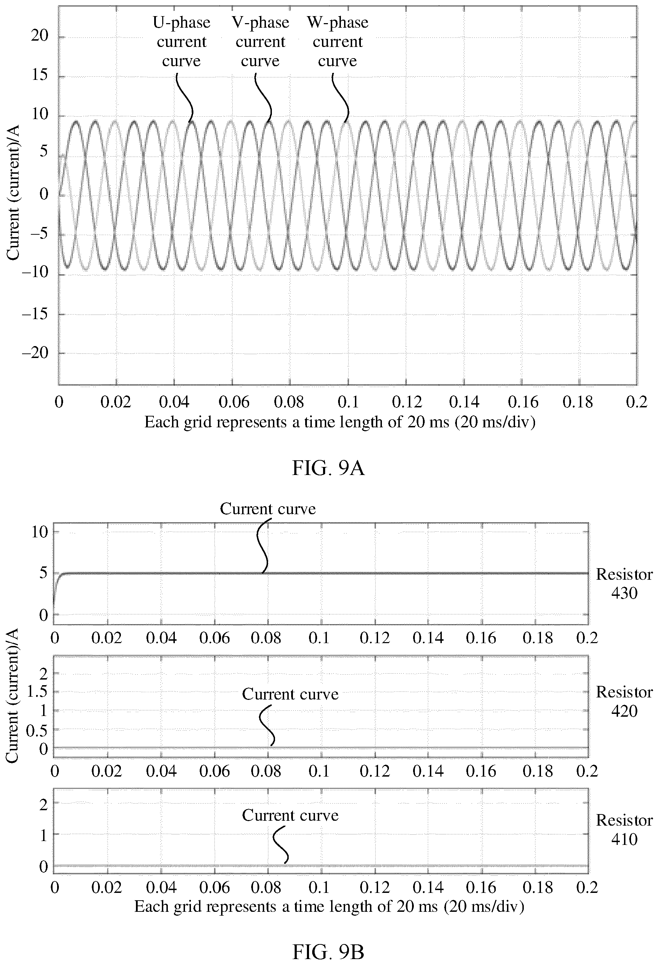

Therefore, the control circuit 530 may control closing and opening of each switch element in the inverter circuit 510, to change a direct current output by the battery 600 into an alternating current, so as to drive the motor 300 to rotate. For details, refer to the foregoing descriptions of the embodiment shown in FIG. 4. Details are not described herein again. In a specific example, in the mode in which the compressor and the heat emitting resistor work simultaneously, an input current of the motor 300 may be shown in FIG. 9A.

In addition, the control circuit 530 may control the switch element 540 to be closed, so that the one or more resistor branches may be connected to the battery 600, to obtain electric energy and generate heat. For example, the control circuit 530 may further adjust a duty cycle of the switch element 540, to adjust magnitudes of input currents of the one or more resistor branches.

It may be understood that, when the compressor and the heat emitting resistor work simultaneously, the air conditioner can perform heating because working of the compressor. Therefore, the heat emitting resistor 400 does not need to work at full load, in other words, there is no need for all of the N resistor branches of the heat emitting resistor 400 to work. Therefore, the one or more resistor branches may be some of the N resistor branches. For example, the one or more resistor branches may be specifically one resistor branch. Correspondingly, only one switch element 540 may be disposed to implement driving of the resistor branch. In this way, electronic components in the thermal management system are further saved, and the costs of the thermal management system are further reduced. In a specific example, as shown in FIG. 8, the one or more resistor branches may be the resistor branch 430, and the switch element 540 is a switch element corresponding to the resistor branch 430.

It should be noted that the foregoing descriptions of a specific quantity of the one or more resistor branches and a specific quantity of the switch elements 540 are merely examples, and are not intended to impose limitations. In some other embodiments, the one or more resistor branches may be specifically two or more resistor branches. Correspondingly, a switch element 540 may be disposed between a D1 end of each of the two or more resistor branches and the battery 600, to separately drive each of the two or more resistor branches. In some other embodiments, the one or more resistor branches may be specifically two or more resistor branches. One switch element 540 may be disposed between D1 ends of the two or more resistor branches and the battery 600. That is, the two or more resistor branches may be driven simultaneously by using one switch element 540.

In a specific example, the one or more resistor branches may be set as the resistor branch 430. Input currents of the resistor branch 430 and other resistor branches may be shown in FIG. 9B. Specifically, when the switch element 540 is closed, the resistor branch 430 may obtain the input current as shown in FIG. 9B, and the input currents of the other resistor branches are zero.

In addition, it should be noted that, in a case in which the relay is used as switch elements S corresponding to the N bridge arms, in order to prolong a service life of the relay, when the relay needs to be closed, the thermal management system may first enter a shutdown state and maintain the shutdown state for a specific duration T 1. In an example, the duration T1 may be specifically about 500 ms, for example, may be 500 ms, 550 ms, or 450 ms. Other examples are not listed one by one herein. That is, before the relay is closed, the thermal management system is shut down for about 500 ms, and then the relay is closed. Next, specific discussions are given based on scenarios.

As the ambient temperature gradually decreases, the thermal management system may switch from the mode in which the compressor and the heat emitting resistor work simultaneously to the mode in which the heat emitting resistor works independently. It can be learned from the foregoing discussion that, in the mode in which the heat emitting resistor works independently, the relay needs to be closed, so that the inverter circuit 510 is used as a drive circuit of the heat emitting resistor 400. Therefore, the thermal management system may first enter the shutdown state, so that the compressor and the heat emitting resistor 400 completely stop working for the duration T1. Then, the relay is closed, so that the thermal management system enters the mode in which the heat emitting resistor works independently.

As the ambient temperature sharply decreases, the thermal management system may switch from the mode in which the compressor works independently to the mode in which the heat emitting resistor works independently. Therefore, the thermal management system may first enter the shutdown state, so that the compressor completely stops working for the duration T1. Then, the relay is closed, so that the thermal management system enters the mode in which the heat emitting resistor works independently.

Through the above methods, a working load of the relay can be reduced, the service life of the relay can be greatly improved, and requirements of vehicle regulations can be met. In addition, the thermal management system is a large time inertia system, and the shutdown state occupies about 500 ms. This does not affect heating of the vehicle greatly.

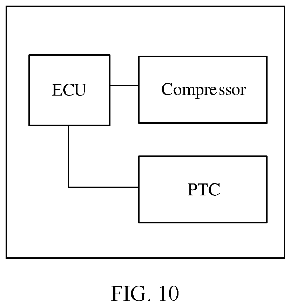

In conclusion, the thermal management system provided in embodiments of this application can control, by using a single driver, the compressor and the heat emitting resistor to work. This reduces use of the electronic components and lines, reduces the costs of the thermal management system, and saves the space of the thermal management system, so that the volume of the thermal management system can be designed to be smaller. In addition, no additional high and low voltage separation is required, and this further reduces the costs of the thermal management system. Specifically, as shown in FIG. 10, a single electronic control unit (electronic control unit, ECU) may be used to control independent working and cooperative working of the compressor and the PTC. The ECU may be used as the driver 500.

It should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A thermal management system for temperature control of an electric vehicle, comprising:
a motor, configured to drive, when rotating, a compressor of an air conditioner to work, to enable the air conditioner to perform heating or cooling;
N resistor branches disposed in parallel, wherein one or more resistors are disposed on each resistor branch, the resistor is configured to convert electric energy into thermal energy, and N is a positive integer greater than 1; and
a driver, comprising a control circuit and an inverter circuit that has N bridge arms, wherein
a midpoint of each of the N bridge arms is connected to one terminal of the motor, and different bridge arms in the N bridge arms are connected to different terminals;
the midpoint of each of the N bridge arms is connected to one of the N resistor branches, different bridge arms in the N bridge arms are connected to different resistor branches, and a first switch is coupled between the midpoint of each of the N bridge arms and the resistor branch connected to each bridge arm;
the control circuit is configured to: control all first switches corresponding to the N bridge arms to be in an open state, and control the inverter circuit to output an alternating current to the motor; and
the control circuit is further configured to: control all the first switches corresponding to the N bridge arms to be in a closed state, and control the inverter circuit to output currents to the N resistor branches.

2. The thermal management system according to claim 1, wherein when a difference obtained by subtracting an energy efficiency ratio of the resistor from an energy efficiency ratio of the compressor is greater than or equal to a first threshold, the control circuit is configured to: control all the first switches corresponding to the N bridge arms to be in the open state, and control the inverter circuit to output the alternating current to the motor.

3. The thermal management system according to claim 1 or 2, wherein when a difference obtained by subtracting the energy efficiency ratio of the compressor from the energy efficiency ratio of the resistor is greater than or equal to a second threshold, the control circuit is configured to: control all the first switches corresponding to the N bridge arms to be in the closed state, and control the inverter circuit to output the currents to the N resistor branches.

4. The thermal management system according to any one of claims 1 to 3, wherein the driver further comprises a second switch disposed between a first resistor branch and a battery, and the first resistor branch is one or more of the N resistor branches; and
the control circuit is configured to: control all the first switches corresponding to the N bridge arms to be in the open state, and control the second switch to enter the closed state, so that a resistor on the first resistor branch obtains a current from the battery.

5. The thermal management system according to claim 4, wherein the second switch comprises one or more switches, and the one or more switches are in a one-to-one correspondence with the one or more resistor branches.

6. The thermal management system according to claim 4 or 5, wherein the second switch is disposed between the first resistor branch and a negative electrode of the battery.

7. The thermal management system according to any one of claims 4 to 6, wherein when a difference between the energy efficiency ratio of the compressor and the energy efficiency ratio of the resistor falls within a preset range, the control circuit is configured to: control all the first switches corresponding to the N bridge arms to be in the open state, and control the second switch to enter the closed state, so that the resistor on the first resistor branch obtains the current from the battery.

8. The thermal management system according to any one of claims 1 to 7, wherein a switch element on one side of the midpoint of the bridge arm is a third switch element coupled to a first electrode of the battery, and a switch element on the other side of the midpoint of the bridge arm is a fourth switch element coupled to a second electrode of the battery; and
the control circuit is configured to: control third switch elements on the N bridge arms to be opened simultaneously, and control fourth switch elements on the N bridge arms to be closed simultaneously, so that the inverter circuit outputs the currents to the N resistor branches.

9. The thermal management system according to claim 8, wherein the first electrode is a positive electrode of the battery, and the second electrode is the negative electrode of the battery; or the first electrode is the negative electrode of the battery, and the second electrode is a positive electrode of the battery.

10. The thermal management system according to claim 8 or 9, wherein the control circuit is configured to control duration in which the fourth switch elements on the N bridge arms are in the closed state in a single pulse period, to control magnitudes of the currents output by the inverter circuit to the N resistor branches.

11. The thermal management system according to any one of claims 1 to 10, wherein the driver comprises a relay, and the relay is used as the first switch corresponding to each of the N bridge arms; or
the first switches corresponding to one or more of the N bridge arms are circuit breakers; or
the first switches corresponding to one or more of the N bridge arms are insulated gate bipolar transistors IGBTs or metal oxide semiconductor field effect transistors MOSFETs.

12. The thermal management system according to any one of claims 1 to 11, wherein the resistor is a positive temperature coefficient PTC resistor.

13. A drive apparatus, wherein the drive apparatus comprises a control circuit and an inverter circuit that has N bridge arms, wherein N is a positive integer greater than 1;
a midpoint of each of the N bridge arms is configured to connect to one terminal in a motor, different bridge arms in the N bridge arms are connected to different terminals, and the motor is configured to drive, when rotating, a compressor of an air conditioner to work, to enable the air conditioner to perform heating or cooling;
the midpoint of each of the N bridge arms is configured to connect to one of N resistor branches, different bridge arms in the N bridge arms are connected to different resistor branches, a first switch is coupled between the midpoint of each of the N bridge arms and the resistor branch connected to each bridge arm, one or more resistors are disposed on each of the N resistor branches, and the resistor is configured to convert electric energy into thermal energy;
the control circuit is configured to: control all first switches corresponding to the N bridge arms to be in an open state, and control the inverter circuit to output an alternating current to the motor; and
the control circuit is configured to: control all the first switches corresponding to the N bridge arms to be in a closed state, and control the inverter circuit to output currents to the N resistor branches.

14. The drive apparatus according to claim 13, wherein when a difference obtained by subtracting an energy efficiency ratio of the resistor from an energy efficiency ratio of the compressor is greater than or equal to a first threshold, the control circuit is configured to: control all the first switches corresponding to the N bridge arms to be in the open state, and control the inverter circuit to output the alternating current to the motor.

15. The drive apparatus according to claim 13 or 14, wherein when a difference obtained by subtracting the energy efficiency ratio of the compressor from the energy efficiency ratio of the resistor is greater than or equal to a second threshold, the control circuit is configured to: control all the first switches corresponding to the N bridge arms to be in the closed state, and control the inverter circuit to output the currents to the N resistor branches.

16. The drive apparatus according to any one of claims 13 to 15, wherein the drive apparatus further comprises a second switch disposed between a first resistor branch and a battery, and the first resistor branch is one or more of the N resistor branches; and
the control circuit is configured to: control all the first switches corresponding to the N bridge arms to be in the open state, and control the second switch to enter the closed state, so that a resistor on the first resistor branch obtains a current from the battery.

17. The drive apparatus according to claim 16, wherein the second switch comprises one or more switches, and the one or more switches are in a one-to-one correspondence with the one or more resistor branches.

18. The drive apparatus according to claim 16 or 17, wherein the second switch is disposed between the first resistor branch and a negative electrode of the battery.

19. The drive apparatus according to any one of claims 16 to 18, wherein when a difference between the energy efficiency ratio of the compressor and the energy efficiency ratio of the resistor falls within a preset range, the control circuit is configured to: control all the first switches corresponding to the N bridge arms to be in the open state, and control the second switch to enter the closed state, so that the resistor on the first resistor branch obtains the current from the battery.

20. The drive apparatus according to any one of claims 13 to 19, wherein a switch element on one side of the midpoint of the bridge arm is a third switch element coupled to a first electrode of the battery, and a switch element on the other side of the midpoint of the bridge arm is a fourth switch element coupled to a second electrode of the battery; and
the control circuit is configured to: control third switch elements on the N bridge arms to be opened simultaneously, and control fourth switch elements on the N bridge arms to be closed simultaneously, so that the inverter circuit outputs the currents to the N resistor branches.

21. The drive apparatus according to claim 20, wherein the first electrode is a positive electrode of the battery, and the second electrode is the negative electrode of the battery; or the first electrode is the negative electrode of the battery, and the second electrode is a positive electrode of the battery.

22. The drive apparatus according to claim 20 or 21, wherein the control circuit is configured to control duration in which the fourth switch elements on the N bridge arms are in the closed state in a single pulse period, to control magnitudes of the currents output by the inverter circuit to the N resistor branches.

23. The drive apparatus according to any one of claims 13 to 22, wherein the drive apparatus comprises a relay, and the relay is used as the first switch corresponding to each of the N bridge arms; or
the first switches corresponding to one or more of the N bridge arms are circuit breakers; or
the first switches corresponding to one or more of the N bridge arms are insulated gate bipolar transistors IGBTs or metal oxide semiconductor field effect transistors MOSFETs.

24. An electric vehicle, comprising the thermal management system according to any one of claims 1 to 12 or the drive apparatus according to any one of claims 13 to 23.
